Europäisches Patentamt

European Patent Office

Office européen des brevets

(11) Veröffentlichungsnummer: **0 224 673**
A2

## (12) EUROPÄISCHE PATENTANMELDUNG

(21) Anmeldenummer: 86113534.1

(22) Anmeldetag: 01.10.86

(51) Int. Cl.⁴: **G 11 B 15/22**
G 11 B 15/43, G 11 B 15/665

(30) Priorität: 30.11.85 DE 3542391

(43) Veröffentlichungstag der Anmeldung:
10.06.87 Patentblatt 87/24

(84) Benannte Vertragsstaaten:
AT CH DE FR GB IT LI

(71) Anmelder: GRUNDIG E.M.V. Elektro-Mechanische
Versuchsanstalt Max Grundig holländ. Stiftung & Co. KG.
Kurgartenstrasse 37
D-8510 Fürth(DE)

(72) Erfinder: Schmidt, Erhard, Ing. grad.
Wickenstrasse 46
D-8510 Fürth/Bayern(DE)

(72) Erfinder: Kutrowatz, Johann
Buchenweg 10
D-8501 Dietenhofen(DE)

(54) Video-Magnetbandgerät.

(57) Beschrieben ist ein Video-Magnetbandgerät mit einer Wickelteller-Bremseinrichtung, wobei das Videogerät eine drehbare Kopftrommel aufweist, und das Magnetband mittels Bandführungsstifte aus einer Kassette mit zwei nebeneinander angeordneten Spulen herausgezogen in Schrägspurführung teilweise um die rotierende Kopftrommel gelegt wird. Die Spulen in der Kassette sind über dem Gerät zugeordnete Wickelteller antreibbar. Das Magnetband liegt im aus der Kassette herausgezogenen oder nur teilweise herausgezogenen Zustand an zwei Bandführungsrollen, die am äußeren Rand der Kassette angeordnet sind, an, und die Bandführungsrollen stehen über Schwenkhebel in Wirkverbindung zu je einem einen Wickelteller umschlingenden Bremsband. Auf den Schwenkhebel wirkt eine Federkraft derart ein, daß abhängig vom Verschwenken des Schwenkhebels von seiner Ausgangslage in seine Gerätebetriebslage, bei Aufrechterhaltung eines Bremsmoments auf die Wickelteller, ein in seiner Drehrichtung jeweils entgegenwirkendes Drehmoment auf den Schwenkhebel ausgeübt wird.

FIG.1

*1*

VIDEO-MAGNETBANDGERÄT

BESCHREIBUNG

Die Erfindung bezieht sich auf ein Video-Magnetbandgerät mit einer Wickelteller-Bremseinrichtung gemäß
dem Oberbegriff des Anspruchs 1.

Es sind verschiedene Bremseinrichtungen für die Wikkelteller zum Antrieb der Kassetten-Bandspulen in
Video-Magnetbandgeräten bekannt, die alle einen vorgegebenen Bandzug für das Magnetband sicherstellen, um
ein einwandfreies Auf- und Abspulen sowohl mit normaler Bandgeschwindigkeit als auch im Schnellauf sowie
ein plötzliches Abstoppen eines Wickelvorganges ermöglichen, ohne daß das Magnetband Schaden erleidet oder
sich im Gerät verheddert. Hierfür hat sich die Verwendung eines Bremsbandes bewährt, das um einen Flansch
am Wickelteller gelegt wird. Das Bremsband ist mit
einem Band-Fühlhebel gekoppelt. Durch veränderte Anlage

2

des Bandes am Fühlhebel ist das Bremsmoment am Wickelteller veränderbar. Auf den Fühlhebel wirkt eine Federkraft ein, die über das Bremsband ein bestimmtes vorgegebenes Grundbremsmoment auf den Wickelteller ausübt.
Beim Einlegen einer Bandkassette in ein Videogerät ist
der Bandfühlhebel, der gleichzeitig als Bandführungsrolle ausgebildet ist, in seine Ausgangslage gebracht
und hintergreift ohne anzuliegen das Magnetband. In
dieser Lage wirkt die Federkraft nicht oder nicht ausreichend auf das Bremsband des Wickeltellers. Da auf
den Wickelteller und somit auch auf die Bandspule auch
in der Ruhelage ein Bremsmoment ausgeübt werden muß, um
ein Nachschieben des Bandes in der Kassette bzw. in das
Gerät zu vermeiden, sind zusätzlich in den bekannten
Videogeräten eine steuerbare Standbremse eingesetzt.
Diese zusätzliche Standbremse ist jedoch aufwendig an
Teilen und erfordert noch verschiedene Ansteuerungselemente. Die Standbremse besteht im wesentlichen aus
einem Bremsarm und einem daran befestigten Bremsklotz.

Die der Erfindung zugrundeliegende Aufgabe besteht darin,
ein Video-Magnetbandgerät, das mit einer Wickelteller-
Bremseinrichtung ausgerüstet ist, die über einen Fühlhebel gesteuert wird und im wesentlichen aus einem um
einen Flansch des Wickeltellers gelegtes Bremsband besteht, derart zu verbessern, daß die bekannterweise zusätzlich erforderliche Standbremse entfallen kann.

3

Diese Aufgabe wird durch die kennzeichnenden Merkmale im Anspruch 1 gelöst.

Die Unteransprüche zeigen Ausgestaltungen der Erfindung.

Die Erfindung wird nachfolgend anhand der Zeichnungen erläutert.

Fig. 1     ist eine vereinfachte Draufsicht auf die wesentlichsten Teile eines Video-Magnetbandgeräts mit einer Einrichtung zur Bandzugregelung,

Fig. 2     ist eine vereinfachte Draufsicht auf einen vergrößert dargestellten Bereich der Fig. 1 mit Teilen zur Einrichtung der Bandzugregelung.

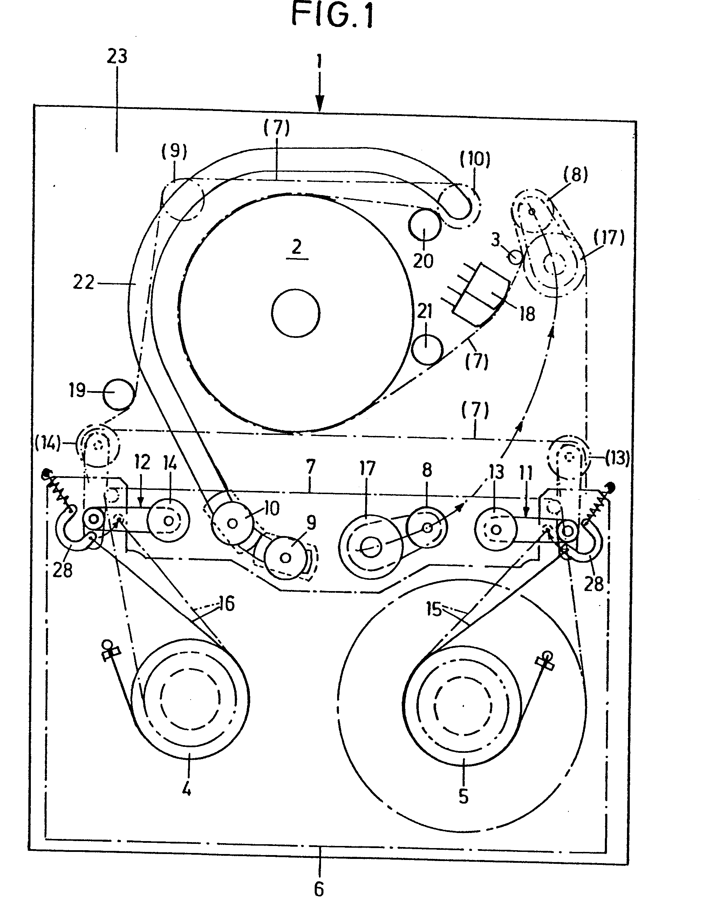

Die Figur 1 zeigt in sehr vereinfachter Darstellung ein Video-Magnetbandgerät 1, das im wesentlichen aus einer Kopftrommel 2, einem Capstan-Antrieb 3, zwei getrennt antreibbare Band-Wickelteller 4 und 5, und einer in das Gerät eingelegten, strichpunktiert gezeichneten Bandkassette 6 besteht. Das Magnetband 7 wird in der eingelegten Kassette von Bandführungsrollen 8, 9, 10 hinterfaßt aus der Kassette herausgezogen und zur Bild-Aufnahme- und -Wiedergabe um die Kopftrommel gelegt (in der Figur gestrichelt dargestellt). Gleichzeitig werden die auf einem Schwenkhebel 11, 12 beidseitig der Kassette befindlichen Bandführungsrollen 13, 14 nach außen verschwenkt (wie in der Figur gestrichelt dargestellt). Die Schwenkhebel 11, 12 wirken je auf ein Bremsband 15, 16, das um die Wickelteller 4 und 5 gelegt ist und regeln hierdurch den Bandzug. Weiterhin sind aus der Zeichnung eine der Bandführungsrolle 8 zugeordnete und somit verschiebbare Andruckrolle 17 zu entnehmen, sowie ein Audiokopf 18 und dem Gerät fest zugeordnete Bandführungsstifte 19, 20, 21. Die Bandführungsrollen 8, 9, 10 sind über eine Kulissenführung 22, bzw. einem nicht dargestellten Hebel bewegbar gelagert. Alle Teile sind auf einem andeutungsweise gezeichneten Chassis 23 befestigt.

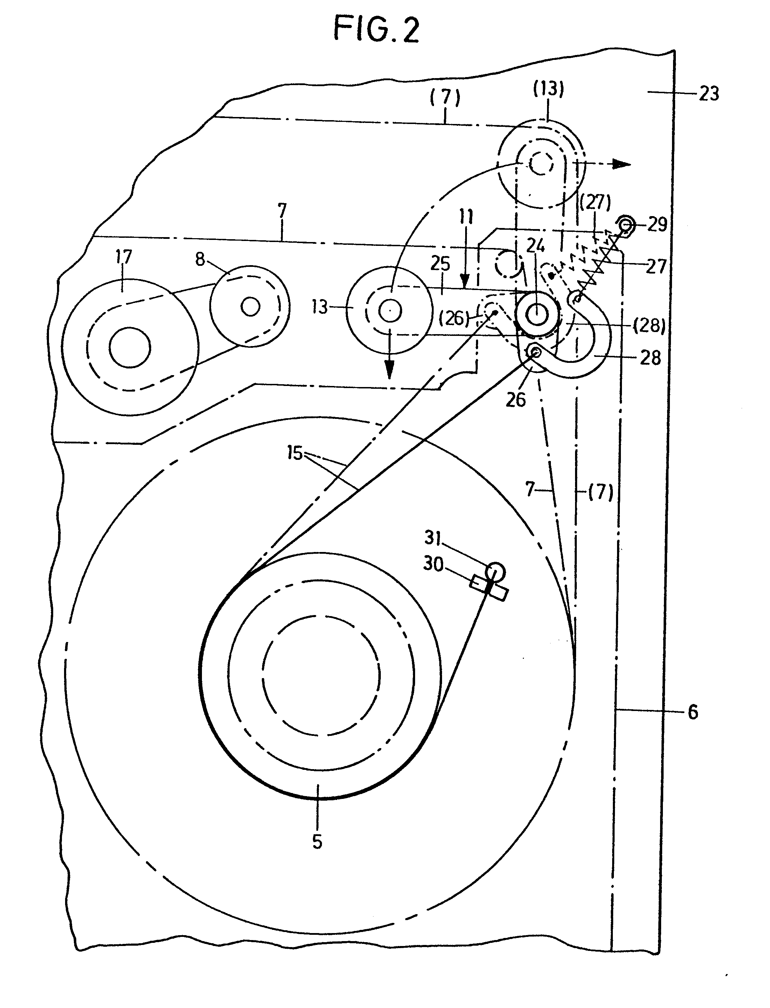

In der Figur 2 ist der Schwenkhebel 11 in vergrößerter Darstellung gezeichnet. Der Schwenkhebel ist mittels einer Achse 24 im Chassis 23 des Gerätes gelagert und weist ein längeres Hebelteil 25 und ein hierzu winklig angeordnetes kürzeres Hebelteil 26 auf. Am Ende des längeren Hebelteils ist eine Bandführungsrolle aufgesetzt. Im kürzeren Hebelteil 26 ist das Bremsband 15 eingehängt, das um den Wickelteller 5 gelegt ist. Weiterhin ist eine Zugfeder 27 mit ihrem einen Ende in einem Bügel 28 eingehängt, der wiederum drehbar auf dem kurzen Hebelteil 26 gelagert ist und mit ihrem anderen Ende ist die Zugfeder in einem im Chassis eingesetzten Stift 29 eingehängt. Die Zugfeder übt in der gezeichneten Lage ein entgegen dem Uhrzeigersinn gerichtetes Drehmoment auf den Schwenkhebel aus (siehe Pfeilrichtung). Gleichzeitig ist das Bremsband 15 gespannt und übt ein erhöhtes Bremsmoment auf den Wickelteller 5 aus. Die Bandbremse wirkt in dieser Lage des Schwenkhebels als Standbremse. Wird für den Gerätebetrieb der Schwenkhebel 11 in die gestrichelt eingezeichnete Lage verschwenkt, so nimmt die Kraftrichtung der Zugfeder 27 eine Lage ein, bei der ein im Uhrzeigersinn gerichtetes Drehmoment auf den Schwenkhebel einwirkt (siehe Pfeil). In dieser Lage des Schwenkhebels kann die Bandkassette in das Gerät eingelegt oder entnommen werden, ohne daß das Magnetband an die Bandführungsrolle 13 zur Anlage kommt. Während des Band-Umspulbetriebes werden die beiden Schwenkhebel 11 und 12 nach außen geschwenkt und das Magnetband 7 nimmt eine veränderte Lage ein, ohne jedoch um die Kopftrommel geführt zu werden. Durch Verändern des Einhängepunktes der Zugfeder 27 am Schwenkhebel oder am Bügel 28 ist das Bremsmoment, das auf den Wickelteller wirkt, zwischen dem Bremsmoment für die Standbremse und für die Betriebsbremse veränderbar. Bedarfsweise ist auch ein gewisser Grundfederzug an der Einspannstelle 30 des Bremsbandes am Chassis 23 vorteilhaft. Zu diesem Zweck ist zwischen der Einspannstelle 30 und dem am Bremsband befindlichen Nippel 31 eine nicht näher dargestellte Druckfeder eingesetzt.

1

VIDEO-MAGNETBANDGERÄT

PATENTANSPRÜCHE

1. Video-Magnetbandgerät mit einer Wickelteller-
Bremseinrichtung, wobei das Videogerät eine drehbare
Kopftrommel aufweist, und das Magnetband mittels Bandführungsstifte aus einer Kassette mit zwei nebeneinander angeordneten Spulen herausgezogen in Schrägspurführung teilweise um die rotierende Kopftrommel gelegt
wird, und die Spulen in der Kassette über Wickelteller (4, 5) im Gerät antreibbar sind, sowie das
Magnetband im aus der Kassette herausgezogenen oder
nur teilweise herausgezogenen Zustand an zwei Bandführungsrollen (13, 14), die am äußeren Bereich der Kassette angeordnet sind, anliegt und die Bandführungsrollen über Schwenkhebel (11, 12) in Wirkverbindung zu je
einem einen Wickelteller umschlingenden Bremsband (15,
16) oder Bremsseil stehen, d a d u r c h  g e -
k e n n z e i c h n e t ,  daß jeder der beiden
Schwenkhebel (11, 12) vom Drehpunkt ausgehend aus

2

einem längeren Hebelteil (25) und einem hierzu winklig angeordneten kürzeren Hebelteil (26) besteht, daß am Ende des längeren Hebelteils eine Bandführungsrolle (13, 14) aufgesetzt ist, daß am kürzeren Hebelteil das eine Ende eines Bremsbandes (15, 16) bzw. Bremsseils eingehängt ist, und eine Federkraft derart auf den Schwenkhebel (11, 12) einwirkt, daß abhängig vom Verschwenken des Schwenkhebels von seiner Ausgangslage in seine Gerätebetriebslage, bei Aufrechterhaltung eines Bremsmoments auf die Wickelteller (4, 5), in seiner Drehrichtung ein jeweils entgegenwirkendes Drehmoment auf den Schwenkhebel (11, 12) ausgeübt wird.

2. Video-Magnetbandgerät nach Anspruch 1, d a durch gekennzeichnet, daß auf den Schwenkhebel (11, 12) eine Zugfeder (27) einwirkt.

3. Video-Magnetbandgerät nach den Ansprüchen 1 und 2, dadurch gekennzeichnet, daß die Zugfeder (27) mit einem Ende direkt oder über einen drehbaren Bügel (28) am Schwenkhebel (11, 12) eingehängt ist und mit dem anderen Ende am Chassis derart befestigt ist, daß die Feder im Sinne einer sogenannten Übertotpunktfeder auf den Schwenkhebel in den Endlagen (Ausgangslage und Gerätebetriebslage) drehrichtungsändernd einwirkt.

FIG.1

FIG.2